# DEMANDE DE BREVET EUROPEEN

(11) **EP 1 027 825 A1**
(43) Date de publication de la demande: **16.08.2000**
(21) Numéro de dépôt: 99403152.4
(22) Date de dépôt: 15.12.1999
(51) Int. Cl.: A01K 5/00, A01D 90/10, A01F 29/10, A01D 87/10, A01F 29/12

(54) **Machine mélangeuse-distributrice d'aliments pour le bétail munie d'un aménagement pour distribuer et recycler lesdits aliments.**

(30) Priorité: 15.12.1998 FR 9815969
(71) Demandeur: Lucas, G, 85130 La Verrie (FR)
(72) Inventeur: Lucas, Gérard, 85130 La Verrie (FR); Retaillaud, Jean-Claude, 85130 La Verrie (FR)
(74) Mandataire: Le Brusque, Maurice

(57) **Abrégé**

Le système d'éjection et de distribution comprend, aménagées à la périphérie supérieure de la volute (4), une sortie (8) pour le recyclage des produits éjectés par la turbine ventilateur (5) et une sortie (9) pour la distribution des produits, latéralement.

La sélection de l'une ou l'autre des sorties s'effectue au moyen d'un volet (10) manoeuvré par un vérin (12). Le mouvement du volet (10) permet d'éclipser automatiquement des contre-couteaux (18 et 19) disposés à l'entrée de la sortie (8) et de la sortie (9), respectivement.

## Description

La présente invention concerne les machines de mélange et de distribution d'aliments pour le bétail munies d'un aménagement pour distribuer et recycler lesdits aliments, selon le cas.

Ces machines se présentent sous la forme d'une remorque comprenant une benne dans laquelle sont chargés des végétaux sous forme de balles par exemple du genre fourrage ou paille, susceptibles d'être complétés par divers aliments sous forme granulés ou autres.

Ces machines comportent un fond mouvant qui fait progresser les produits vers un dispositif de démêlage-déchiquetage des balles, lequel dispositif de démêlage-déchiquetage se situe en amont d'une turbine ventilateur qui propulse et éjecte les produits soit pour les distribuer dans les bâtiments d'élevage ou autres, soit pour effectuer un recyclage dans la benne afin de mélanger les différents produits introduits dans ladite benne.

La présente invention propose un système d'éjection et de distribution aménagé autour de la turbine ventilateur qui présente des avantages au niveau de son utilisation grâce à la simplicité des réglages et une grande efficacité au niveau de son fonctionnement général grâce à une suppression des risques de bourrage.

Le système d'éjection selon l'invention comprend, aménagées sur la volute qui enveloppe la turbine ventilateur, au moins deux sorties tangentielles, l'une d'elles étant aménagée pour le recyclage avec une éjection des produits dans la benne et l'autre pour distribuer latéralement les produits, et il comprend également un dispositif de sélection desdites sorties, en forme de portion de volute et des contre-couteaux disposés au niveau de chaque sortie, aménagés de façon à pouvoir s'escamoter automatiquement sous l'effet dudit dispositif de sélection lorsque la sortie correspondante est obturée par ledit dispositif.

Toujours selon l'invention, le dispositif de sélection est constitué d'une portion de volute, réalisée en tôle, portée par un secteur disposé en façade sur la paroi frontale de ladite volute, lequel secteur est mobile autour de l'axe de la turbine ventilateur, manoeuvré au moyen d'un vérin, pour masquer l'une ou l'autre des sorties selon le choix de l'opérateur.

Selon l'invention, le contre-couteau disposé au niveau de la sortie recyclage comporte un axe parallèle à l'axe de la turbine ventilateur, lequel axe est situé en aval de l'arête de coupe, au-dessus du plan de tangence de ladite arête de coupe par rapport à l'enveloppe de ladite turbine ventilateur.

Toujours selon l'invention, de la même façon, le contre-couteau disposé au niveau de la sortie distribution, est monté sur un axe qui est parallèle à l'axe de la turbine ventilateur, lequel axe est situé en amont de l'arête de coupe, sous le plan de tangence de ladite arête par rapport à l'enveloppe de ladite turbine ventilateur.

Toujours selon l'invention, les contre-couteaux sont maintenus en position active au moyen d'un organe élastique qui exerce une pression, relativement faible, afin de ne pas entraver leur escamotage par le volet de sélection, lors du déplacement de ce dernier.

Les contre-couteaux sont en effet auto-positionnés et maintenus automatiquement en position active de coupe du fait de leur conception et en particulier de leur arrimage sur la volute Les forces de réaction provenant de la coupe, tendent à déplacer les contre-couteaux vers le centre de la turbine ventilateur, c'est-à-dire vers les pales de la turbine qui font office de couteaux.

Toujours selon l'invention, les contre-couteaux sont placés en position active par des organes élastiques en forme de vérins et cette position est établie au moyen de butées réglables consistant en au moins une tige filetée.

Toujours selon l'invention, l'arête des contre-couteaux est en forme de Vé avec la pointe du fond du Vé située en aval, selon le sens des produits.

Selon une autre disposition de l'invention, le contre-couteau de la sortie recyclage se présente sous la forme d'une plaque de tôle pliée en forme de dièdre avec, dans le fond du dièdre entre le pli dudit dièdre et l'arête de coupe, un déflecteur qui masque l'espace entre ledit contre-couteau et la paroi du canal de sortie.

Toujours selon l'invention, le contre-couteau de la sortie distribution se présente lui aussi sous la forme d'une plaque de tôle, portée par des bras latéraux de faible épaisseur qui s'étendent entre l'axe d'articulation et les bordures dudit contre-couteau, lesquels bras s'étendent à travers la paroi supérieure du conduit de ladite sortie distribution pour coopérer avec des vérins de maintien dudit contre-couteau situé à l'extérieur dudit conduit.

L'invention sera encore détaillée à l'aide de la description suivante et des dessins annexés, donnés à titre indicatif, et dans lesquels :
- la figure 1 représente schématiquement et de façon partielle, une machine mélangeuse-distributrice équipée du système d'éjection et de distribution selon l'invention ;
- la figure 2 représente schématiquement, vu de face, le système d'éjection dans la configuration recyclage et mélange, distribution fermée ;
- la figure 3 représente le système d'éjection dans la configuration distribution, recyclage fermé ;
- la figure 4 représente d'une façon plus détaillée le contre-couteau disposé au niveau de la sortie recyclage et mélange, avec ses moyens de réglage ;
- la figure 5 représente le contre-couteau de la figure 4, seul, vu de dessus ;
- la figure 6 représente d'une façon plus détaillée, le contre-couteau disposé au niveau de la sortie distribution, en position active ;
- la figure 7 représente le contre-couteau de la figure 6, seul, vu de dessus.

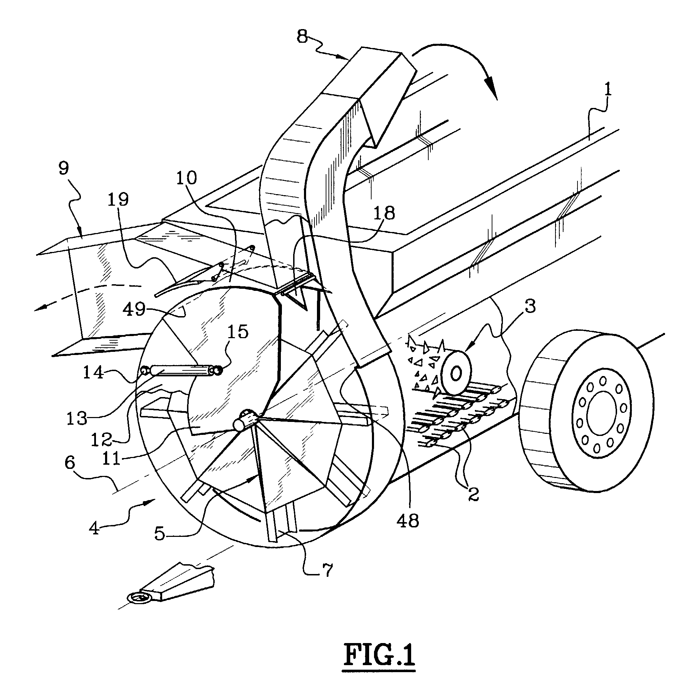

Tel que représenté figure 1, la machine de mélange et distribution se présente sous la forme d'une remorque comprenant une benne 1 dans laquelle sont introduites des balles de végétaux comme par exemple des balles de fourrage ou de paille. Cette benne est normalement attelée à un tracteur dont la prise de force est utilisée pour actionner les différents organes en mouvement.

Les différents organes de la machine sont constitués d'un tapis 2 disposé dans le fond de la benne 1, lequel tapis fait progresser les produits et en particulier les balles de fourrage par exemple vers un dispositif démêleur-déchiqueteur 3 constitué d'un ou de plusieurs rotors munis de dents comme schématisé sur la figure.

La partie avant de la benne est ouverte sur une volute 4 qui enveloppe partiellement une turbine ventilateur 5; cette turbine 5 tourne selon un axe 6 qui est un axe longitudinal, et elle est munie de palettes 7 qui propulsent et éjectent les produits provenant du dispositif démêleur-déchiqueteur 3, vers des sorties tangentielles et en particulier vers une sortie 8 aménagée pour diriger les produits - vers l'intérieur de la benne 1, de façon à effectuer un recyclage permettant de mélanger les produits par exemple le fourrage avec d'autres produits constituant des aliments pour le bétail, et - vers une sortie 9, disposée latéralement, c'est-à-dire sur le côté de la benne 1, qui permet d'orienter les produits soit dans des auges, soit sur l'aire de parcage des animaux pour distribuer les aliments ou réaliser le paillage.

L'opérateur choisit et oriente les produits vers la sortie 8 ou la sortie 9, selon les besoins, au moyen d'un dispositif sélecteur qui comprend un volet 10 en forme d'arc, porté par un secteur radial 11 qui est centré et guidé sur l'axe 6 de la turbine ventilateur 5. Ce secteur 11 couvre la paroi avant 12 de la volute 4. Le dispositif sélecteur est manoeuvré au moyen d'un vérin 13 interposé entre un axe 14 solidaire de la paroi 12 de la volute 4 et un axe 15 solidaire du secteur 11.

Le volet 10 du sélecteur est constitué d'une portion de l'enveloppe externe de la volute, qui masque de façon sélective, soit l'orifice de la sortie 8, soit l'orifice de la sortie 9, formant avec ladite volute, une surface lisse et continue autour de l'enveloppe cylindrique 17 de la turbine ventilateur 6.

Le volet 4 s'étend autour de la turbine ventilateur 5 sur environ les deux tiers de la circonférence de ladite turbine, entre son arête 48 correspondant à la sortie 8 et son arête 49 correspondant à la sortie 9.

On remarque la présence d'un contre-couteau 18 au niveau de l'orifice de la sortis 8 et un contre-couteau 19 au niveau de l'orifice de la sortie 9. Les contre-couteaux 18 et 19 sont disposés à la périphérie de la turbine ventilateur 5, coopérant avec les palettes 7 de ladite turbine ventilateur 5 qui font office de couteaux.

Ces contre-couteaux 18 et 19 détaillés plus loin, sont articulés sur des axes parallèles à l'axe 6 de la turbine. Ils présentent la particularité d'être chacun escamotable, automatiquement, par le volet 10 lorsque ce dernier se positionne en vue de masquer l'orifice d'entrée de la sortie 8 ou de la sortie 9 selon le cas.

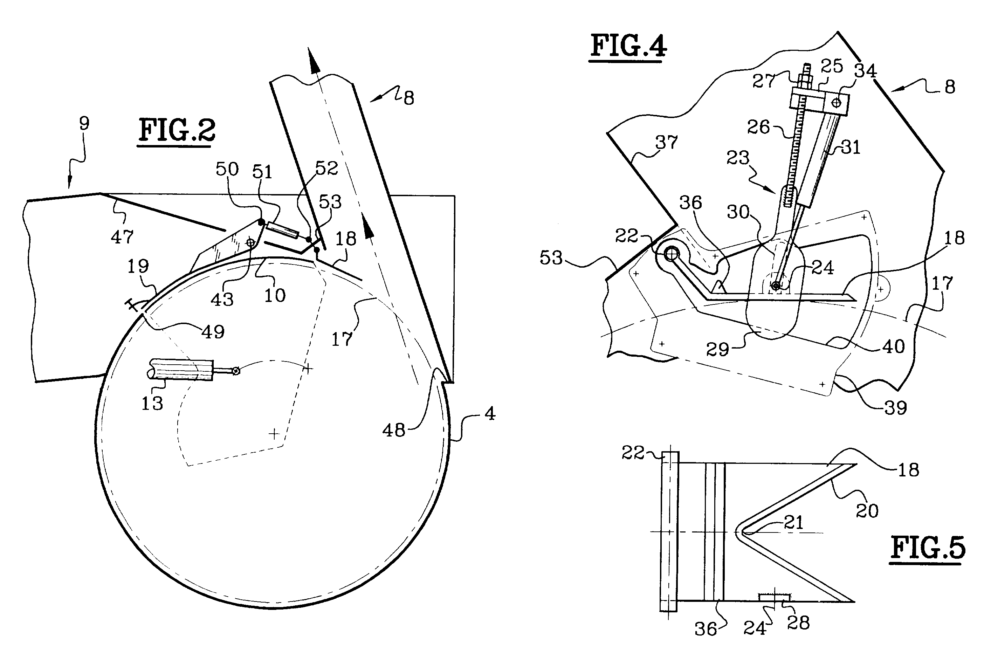

La figure 2 représente, vu de face schématiquement, le système d'éjection avec le volet 10 positionné comme pour la figure 1, de façon à permettre l'éjection des produits vers la sortie 8, obturant l'orifice de la sortie 9.

On retrouve aussi figure2, l'enveloppe de la volute 4, laquelle enveloppe est ouverte à sa partie supérieure pour permettre l'éjection des produits vers la sortie 8 d'une part et l'éjection, suivant la sélection, vers la sortie 9 d'autre part.

Le volet sélecteur 10 est positionné, figure 2, de façon à masquer l'orifice de la sortie 9. On remarque que le contre-couteau 19 est escamoté par le volet 10, ce qui permet d'obtenir une surface continue sans obstacle à l'intérieur de la volute 4, grâce audit volet 10 qui prend la place du contre-couteau 19 et forme une sorte de prolongement de ladite volute, entre le contre-couteau 18 et l'arête 49 de la volute.

Toujours figure 2, le contre-couteau 18 disposé dans la partie aval de l'orifice de l'entrée de la sortie 8, est en position active coopérant avec les palettes 7 de la turbine ventilateur 5 dont l'enveloppe 17 apparaît en traits mixtes fins dans la volute 4.

La figure 3 montre le système éjecteur dans une configuration qui permet de distribuer les produits c'est-à-dire de les éjecter vers la sortie latérale 9. Dans cette configuration, le volet sélecteur 10 est déplacé au moyen du vérin 13, de la position représentée figure 2 à la position d'obturation de l'orifice de la sortie 8. Ce volet 10 escamote automatiquement le contre-couteau 18 situé dans la partie aval de l'orifice d'entrée de la sortie 8 alors que le contre-couteau 19 reprend une position active normale coopérant avec les palettes 7 de la turbine ventilateur 5 dont l'enveloppe 17 est représentée en traits mixtes fins.

Là aussi, la surface interne de la volute 4 est continue, sans aspérités, ce qui permet de réduire le bruit au niveau de ce système éjecteur et aussi d'éviter les phénomènes de bourrage.

La figure 4 représente d'une façon plus détaillée, le montage du contre-couteau 18. Ce contre-couteau 18 se présente en fait sous la forme d'une plaque de tôle pliée formant un dièdre. Comme représenté aussi figure 5, vu de dessus, ce contre-couteau comporte une arête de coupe 20 en forme de Vé dont la pointe centrale 21 est située vers l'aval selon le sens d'écoulement des produits. En aval de la pointe 21, la contre-couteau comporte un axe d'articulation 22. Cet axe d'articulation 22 est parallèle à l'axe 6 de la turbine ventilateur. Il se situe au-dessus du plan de tangence de l'arête 20 par rapport à l'enveloppe de la périphérie 17 de la turbine ventilateur 5. Cette position de l'axe 22 permet d'obtenir au niveau des efforts de découpe, une réaction qui tend à maintenir le contre-couteau 18 sur la périphérie de la turbine ventilateur.

La position du contre-couteau 18 est établie au moyen d'un tirant 23 qui est solidaire dudit contre-couteau 18, au niveau d'un axe d'articulation 24, et qui s'étend jusqu'à un point fixe disposé sur la face frontale de la tubulure de la sortie 8. Ce point fixe est constitué d'une patte 25 traversée par une tige filetée 26, laquelle patte 25 fait office de butée pour les écrous de réglage et contre-écrou 27 disposés à l'extrémité supérieure de ladite tige 26.

La tige filetée 26 est solidaire d'une plaque 29 et l'ensemble forme le tirant 23. La plaque 29 coopère avec l'axe 24, et cette plaque 29 masque la lumière 30 dans laquelle évolue ledit axe 24 lors de l'escamotage du contre-couteau 18.

Le contre-couteau 18 est libre autour de son axe d'articulation 22 pour s'escamoter. Sa position de tangence par rapport à l'enveloppe de la périphérie 17 de la turbine ventilateur est réglée au moyen des écrous 27 disposés sur la tige 26 par rapport à la patte 25 qui fait office de butée.

Le contre-couteau 18 revient automatiquement en position normale de découpe sous l'effet d'un organe élastique constitué d'un vérin 31 interposé entre l'axe 24 et un axe 34 disposé au niveau de la patte 25. Ce vérin 31 a simplement pour effet de ramener le contre-couteau 18 en position soit après son escamotage par le biais du volet sélecteur 10 soit après un escamotage dû à un bourrage ou autre.

On remarque, sur le contre-couteau 18, entre la pointe 21 de l'arête de coupe et le pli 35 formant l'angle du dièdre, un déflecteur 36 qui permet de masquer l'espace entre la paroi 37 de la tubulure de la sortie 8 et la surface du contre-couteau.

On remarque, figure 4, comme esquissé en traits mixtes fins, le flasque 39 qui masque l'orifice 40 aménagé en façade du système d'éjection, dans la volute et la paroi de la tubulure de sortie 8, pour loger le contre-couteau 18. Le flasque 39 fait office de trappe de visite pour le contre-couteau et de palier pour l'axe 22.

L'axe 24 coopère avec le contre-couteau 18 au moyen d'une patte latérale 28 soudée à l'équerre sur le rebord de la surface supérieure dudit contre-couteau 18, comme représenté figure 5.

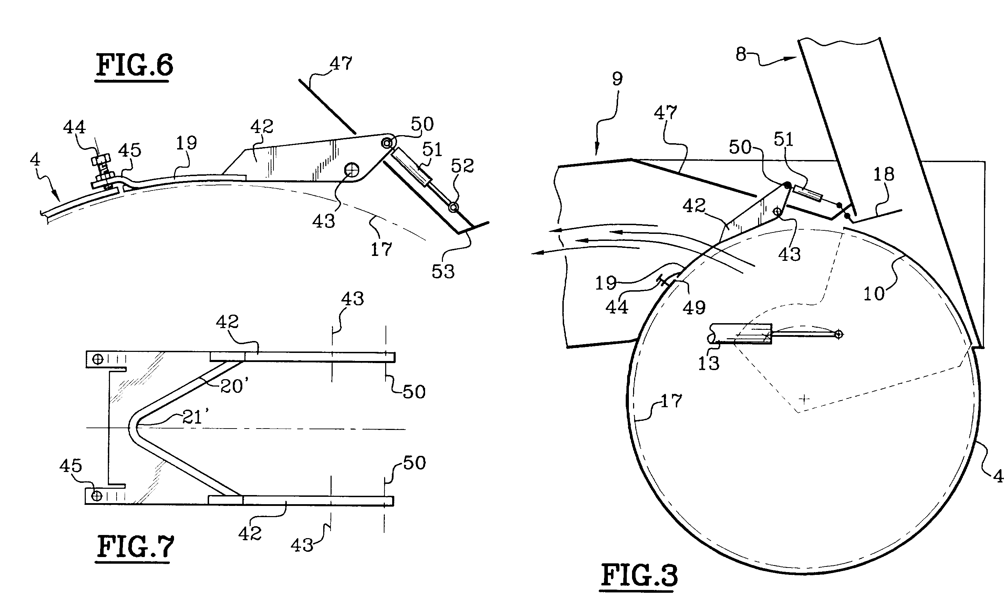

Les figures 6 et 7 montrent d'une façon plus détaillée, le contre-couteau 19 disposé dans l'orifice d'entrée de la sortie 9.

Ce contre-couteau 19 se présente sous la forme d'une plaque avec une arête de coupe 20' en forme de Vé comme pour le contre-couteau 18 et une pointe 21' au centre qui se situe en aval.

Ce contre-couteau se présente sous la forme d'une plaque et sa partie amont est solidaire de bras latéraux 42 qui s'étendent jusqu'à l'axe d'articulation 43 du contre-couteau. Les bras latéraux 42 sont constitués de plats de faible épaisseur pour ne pas entraver l'écoulement du produit lors de son éjection. L'axe 43 est en fait constitué de portions d'axes disposées de part et d'autre des bras 42 pour laisser libre le passage entre lesdits bras.

Ces portions d'axe 43 sont guidées dans les parois latérales de la sortie 9 et sont situées en amont du contre-couteau proprement dit et de plus, en-dessous du plan de tangence de ce dernier avec l'enveloppe de la périphérie 17 de la turbine ventilateur 5, représentée en traits mixtes fins.

Comme précédemment, les efforts liés à la coupe des produits tendent à maintenir le contre-couteau 19 dans sa position active de découpe c'est-à-dire tendent à le déplacer vers le centre de la turbine ventilateur 5.

Le contre-couteau 19 s'escamote en pivotant autour de l'axe 43. Cet escamotage résulte, comme représenté figure 2, de la présence du volet sélecteur 10 qui s'interpose entre la périphérie 17 de la turbine ventilateur et la lame du contre-couteau 19. Ce volet sélecteur 10 se positionne dans le prolongement de la volute 4, en appui contre l'arête 49 de cette dernière.

Le réglage de la position du contre-couteau 19 s'effectue au moyen de vis 44 disposées sur des pattes 45 aménagées latéralement dans le prolongement du contre-couteau 19, lesquelles pattes sont façonnées pour passer au-dessus de la paroi de la volute 4. Le contre-couteau 19 se situe dans le prolongement de la paroi de la volute 4 de façon à former une continuité de la paroi évitant ainsi les retenues de matière et surtout le bruit.

Les vis 44 permettent d'effectuer un réglage micrométrique de la position du contre-couteau 19 par rapport à la périphérie de la turbine ventilateur.

Ces vis de réglage 44 sont accessibles par l'orifice de sortie 9.

Comme le contre-couteau 18, le contre-couteau 19 est maintenu en position de façon élastique au moyen d'organes du genre vérins 51.

Les bras 42 s'étendent au-delà de l'axe 43, formant des prolongements qui traversent la paroi supérieure 47 de la sortie distribution 9. Les extrémités de ces prolongements comportent des axes 50 qui coopèrent avec les vérins 51 servant à maintenir le contre-couteau 19 en position active.

Ces vérins 51, du type vérins à ressort ou à gaz, sont ancrés par le biais d'un axe 52 sur la paroi 53 de la sortie 9.

La figure 7 montre, vu de dessus, le contre-couteau 19 seul. Ce contre-couteau, constitué d'une plaque découpée en Vé, est solidaire des bras latéraux 42 qui s'étendent en amont de l'arête de coupe 20'. Ces bras 42 comportent l'axe d'articulation 43 du contre-couteau et s'étendent au-delà pour coopérer par le biais des axes 50, avec les vérins 51.

L'extrémité aval du contre-couteau comporte les pattes 45 sur lesquelles sont montées les vis de réglage 44 visibles figure 6.

## Revendications

1. Machine mélangeuse-distributrice d'aliments pour le bétail comprenant une turbine ventilateur (5) à palette, de grand diamètre, disposée dans une volute (4) à l'avant de la benne (1), alimentée par un tapis (2) et/ou des organes de déchiquetage (3) qui mettent en pièces la ou les balles disposées dans ladite benne, laquelle machine comprend un système d'éjection et de distribution muni, d'une part, d'au moins deux sorties tangentielles disposées sur ladite volute : - une sortie (8) aménagée pour permettre le recyclage des produits éjectés vers la benne, et - une autre sortie (9) pour réaliser la distribution latérale des produits et, d'autre part, d'un dispositif de sélection desdites sorties et des contre-couteaux (18, 19) disposés au niveau des orifices de chaque sortie, lesquels contre-couteaux sont aménagés de façon à pouvoir s'escamoter automatiquement notamment sous l'effet du dispositif de sélection lorsque la sortie correspondante est obturée par ledit dispositif de sélection.

2. Machine mélangeuse-distributrice selon la revendication 1, caractérisée en ce que le dispositif de sélection est constitué d'un volet (10) formé d'une portion de volute, laquelle portion de volute est portée par un secteur radial (11) qui est disposé en façade, sur la paroi frontale de la volute (4) de la turbine ventilateur (5), lequel secteur est articulé sur l'axe (6) de ladite turbine ventilateur, manoeuvré au moyen d'un vérin (13) pour masquer soit la sortie (8), soit la sortie (9) selon le choix de l'opérateur.

3. Machine mélangeuse-distributrice selon l'une quelconque des revendications 1 ou 2, caractérisée en ce que le contre-couteau (18) disposé au niveau de l'orifice de la sortie recyclage (8), comporte un axe (22) parallèle à l'axe (6) de la turbine ventilateur, lequel axe (22) est situé en aval de l'arête de coupe (20) dudit contre-couteau, au-dessus du plan de tangence entre l'arête de coupe du contre-couteau et la périphérie (17) de la turbine ventilateur (5).

4. Machine mélangeuse-distributrice selon l'une quelconque des revendications 1 à 3, caractérisée en ce que le contre-couteau (19) disposé au niveau de l'orifice de la sortie distribution (9) est articulé sur un axe (43) qui est parallèle à l'axe (6) de la turbine ventilateur (5), lequel axe est situé en amont de l'arête de coupe (20') dudit contre-couteau, sous le plan de tangence de ladite arête par rapport à l'enveloppe de la périphérie (17) de la turbine ventilateur (5).

5. Machine mélangeuse-distributrice selon l'une quelconque des revendications 3 ou 4, caractérisée en ce que les contre-couteaux (18,19) sont maintenus en position active au moyen d'un organe élastique en forme de vérin (31, 51).

6. Machine mélangeuse-distributrice selon la revendication 5, caractérisée en ce que la position des contre-couteaux (18, 19) est établie au moyen d'une butée réglable comprenant au moins une tige filetée (26, 46) qui s'étend entre le contre-couteau et une partie fixe permettant notamment d'effectuer un réglage micrométrique de la position des contre-couteaux.

7. Machine mélangeuse-distributrice selon l'une quelconque des revendications 1 à 6, caractérisée en ce que l'arête de coupe des contre-couteaux (18, 19), se présente sous la forme d'un Vé dont la pointe (21, 21') est située en aval selon le sens d'écoulement des produits.

8. Machine mélangeuse-distributrice selon la revendication 7, caractérisée en ce que le contre-couteau (18) disposé au niveau de l'orifice de la sortie recyclage (8) comporte un déflecteur (36) situé en aval de la pointe (21) de l'arête de coupe, lequel déflecteur (36) établit une sorte de continuité avec la paroi (37) du conduit de la sortie (8).

9. Machine mélangeuse-distributrice selon la revendication 4, caractérisée en ce que le contre-couteau (19) disposé au niveau de l'orifice de la sortie distribution (9) est constitué d'une lame solidaire de deux bras latéraux (42) de faible épaisseur qui s'étendent entre l'axe d'articulation (43) et l'entrée de l'arête de coupe (20').

10. Machine mélangeuse-distributrice selon la revendication 9, caractérisée en ce que les vérins (51) sont disposés au-dessus du conduit de la sortie distribution (9), interposés entre la paroi dudit conduit et des prolongements des bras latéraux (42), lesquels prolongements traversent ladite paroi et comportent chacun un axe d'articulation pour accueillir l'une des extrémités desdits vérins (51).
